# EUROPÄISCHE PATENTSCHRIFT

(11) **EP 3 693 683 B1**
(45) Veröffentlichungstag und Bekanntmachung des Hinweises auf die Patenterteilung: **28.01.2026**
(21) Anmeldenummer: 20153640.6
(22) Anmeldetag: 24.01.2020
(51) Int. Cl.: F25B 25/00, F25B 30/02, F25B 49/00

(54) **DIFFUSIONSSPERRE MITTELS SCHUTZSCHICHTEN**
DIFFUSION BARRIER USING PROTECTIVE LAYERS
BARRIÈRE DE DIFFUSION AU MOYEN DE COUCHES DE PROTECTION

(30) Priorität: 06.02.2019 DE 102019102911; 12.07.2019 DE 102019118984
(43) Veröffentlichungstag der Anmeldung: 12.08.2020
(73) Patentinhaber: Vaillant GmbH, 42859 Remscheid (DE)
(72) Erfinder: Lingk, Tobias, 42799 Leichlingen (DE); Krampe-Zadler, Christof, 44628 Herne (DE); Spahn, Hans-Josef, 40699 Erkrath (DE)
(74) Vertreter: Popp, Carsten

(56) Entgegenhaltungen:
- DE-A1- 102011 116 863
- DE-C1- 19 525 064
- JP-A- 2009 026 266

## Beschreibung

Die Erfindung betrifft irreguläre Zustände in Kältekreisen, in denen ein als Kältemittel wirkendes Arbeitsfluid in einem thermodynamischen Kreisprozess, wie zum Beispiel dem Clausius-Rankine-Kreisprozess, geführt wird, sowie deren adsorptive Sicherheitseinrichtung. Vorwiegend sind dies Wärmepumpen, Klimaanlagen und Kühlgeräte, wie sie in Wohngebäuden gebräuchlich sind. Unter Wohngebäuden werden dabei Privathäuser, Miethauskomplexe, Krankenhäuser, Hotelanlagen, Gastronomie und kombinierte Wohn- und Geschäftshäuser verstanden, in denen Menschen dauerhaft leben und arbeiten, im Unterschied zu mobilen Vorrichtungen wie KFZ-Klimaanlagen oder Transportboxen, oder auch Industrieanlagen oder medizintechnischen Geräten. Gemeinsam ist diesen Kreisprozessen, dass sie unter Einsatz von Energie Nutzwärme oder Nutzkälte erzeugen und Wärmeverschiebungssysteme bilden.

Die zum Einsatz kommenden thermodynamischen Kreisprozesse sind seit langem bekannt, ebenso die Sicherheitsprobleme, die bei der Verwendung geeigneter Arbeitsfluide entstehen können. Abgesehen von Wasser sind die bekanntesten damaligen Arbeitsfluide brennbar und giftig. Sie führten im vergangenen Jahrhundert zur Entwicklung der Sicherheitskältemittel, die aus fluorierten Kohlenwasserstoffen bestanden. Es zeigte sich jedoch, dass diese Sicherheitskältemittel zur Klimaerwärmung führen und dass ihre sicherheitstechnische Unbedenklichkeit zu konstruktiven Unachtsamkeiten führte. Bis zu 70 % des Umsatzes entfiel auf den Nachfüllbedarf undichter Anlagen und deren Leckageverluste, der hingenommen wurde, solange dies im Einzelfall als wirtschaftlich vertretbar empfunden wurde und Bedarf an Ersatzbeschaffung förderte.

Heutige Kältekreise sind ausgestattet mit diesen Sicherheitskältemitteln der Sicherheitsklasse A1, d.h. sie sind nicht giftig und nicht brennbar. Die gebräuchlichsten Kältemittel im Bereich der Wärmepumpenanwendungen sind die Kältemittel R134a, R407C bzw. R410A, allesamt Fluorkohlenwasserstoffverbindungen. Der Einsatz dieser Kältemittel war bis Januar 2015 keinerlei Restriktionen unterworfen, die Einführung der F-Gase- Verordnung (EU) 517/2014 zum 01. Januar 2015 schränkt zukünftig die Anwendung von Fluorkohlenwasserstoff- Kältemitteln über Mengenbegrenzungen in der Europäischen Union derartig ein, dass die Preise bisheriger Kältemittel deutlich ansteigen werden. Ziel der F-Gase-Verordnung ist die mittelfristige Verbannung der treibhausgasfördernden Kältemittel und den Ersatz durch natürliche Kältemittel bzw. gegen chemische Kältemittel mit erheblich reduziertem Treibhauspotenzial.

Nachteilig ist jedoch, dass nahezu alle Kältemittelalternativen zur Gruppe der brennbaren Kältemittel gehören, insbesondere die technisch vielversprechendsten Kältemittel wie z.B. R290 (Propan) und R1270 (Propylen).

= Es ist daher einerseits äußerst problematisch, die konstruktiven Prinzipien für Kältemittel-führende thermodynamische Prozesse zu übernehmen, die sich bei Sicherheitskältemitteln scheinbar gut bewährt haben, andererseits auf die Anlagenkonzepte aus der Zeit vor Einführung der Sicherheitskältemittel aufzusetzen. Dies liegt auch daran, dass inzwischen aus Einzelgeräten komplexe Anlagen geworden sind, was die Anzahl der Möglichkeiten für Störungen und deren Folgen vervielfältigt hat.

Die DE 10 2011 116 863 A1 beschreibt ein Verfahren zur Sicherung einer Vorrichtung für einen thermodynamischen Kreisprozess, welche mit einem Prozessfluid betrieben wird, das mindesten eine umweltgefährliche, giftige und/oder entzündliche Substanz enthält oder daraus besteht. Im Falle einer Leckage in der Vorrichtung für einen thermodynamischen Kreisprozess ein Adsorptionsmittel mit dem Prozessfluid, insbesondere Ammoniak, Propan oder Propen, in Kontakt gebracht und die Substanz durch das Adsorptionsmittel selektiv gebunden. Das Adsorptionsmittel wird nach Gebrauch regeneriert. Als Adsorptionsmittel werden Zeolith, auch in Kombination mit Imidazol oder Phosphaten, ferner CuBTC vorgeschlagen, das Adsorptionsmittel kann in Form einer Schüttung, eines Formkörpers, eines Anstrichs, eines Sprühfilms oder einer Beschichtung ausgestattet sein. Die Trägerstruktur des Formkörpers kann aus Mikrostruktur, Lamellenstruktur, Rohrbündel, Rohrregister und Blech bestehen und muss mechanisch stabil sowie stark oberflächenvergrößernd sein. Eine Umwälzung der potenziell kontaminierten Luft erfolgt üblicherweise kontinuierlich, kann aber auch durch einen Sensor initiiert werden, der die Lüftung nach Erreichen eines Schwellenwerts oder bei einem erkannten Havariefall einschaltet. Die Adsorption kann innerhalb oder außerhalb eines geschlossenen Raumes durchgeführt werden.

Die DE 195 25 064 C1 offenbart eine Vorrichtung zur sicheren Durchführung eines linksdrehenden thermodynamischen Kreisprozesses entsprechend dem Oberbegriff des unabhängigen Anspruchs 1, und beschreibt eine Kältemaschine mit einem gasdicht ausgebildeten Gehäuse, welches alle kältemittelführenden Komponenten der Maschine aufnimmt, ein das Innere des gasdichten Gehäuses mit einem Auslass verbindender Raum vorgesehen ist, und der Raum mit einem das Kältemittel sorbierenden Stoff gefüllt ist. Die Menge des sorbierenden Stoffes wird dabei so dimensioniert, dass die gesamte Menge an eventuell austretendem Kältemittel aufgenommen und von der Umwelt ferngehalten werden kann. Der mit dem sorbierenden Stoff gefüllte Raum ist zur Umgebung hin offen. Bei Kältemitteln, die schwerer als Luft sind, ist der Raum nach unten hin offen, bei solchen, die leichter sind, ist er nach oben hin offen, so dass ein Fördergebläse nicht erforderlich ist. Das Sorptionsmittel wird in das Gehäuse eingebracht und umschließt die Kältemaschine bzw. die kältemittelführenden Einrichtungen vollständig. Auf seinem Weg nach außen sind Schikanen vorgesehen, die Kurzschlussströmungen verhindern und entweichendes Gas durch das Sorptionsmittel zwingen. Auch eine doppelwandige Ausführungsform, bei der das Sorptionsmittel im Doppelmantel angeordnet ist, ist möglich. Am Ausgang des mit dem sorbierenden Stoffes gefüllten Raumes zur Umgebung hin kann eine Messeinrichtung für Kältemittel vorgesehen werden.

Die EP 3 106 780 A1 beschreibt eine Wärmepumpenanlage, die in einem mit einem Bindemittel ausgekleideten, luftdichten Gehäuse untergebracht ist. Innerhalb dieses Gehäuses kann eine Adsorptionseinheit mit einer Zwangslüftung angeordnet sein, die im Umluftbetrieb die Luft im Gehäuse reinigt. Dieser Umluftbetrieb kann kontinuierlich oder nur im Störfall oder in regelmäßigen Intervallen erfolgen. Stromab dieser Sorptionsstufe kann auch ein Zündbrenner, eine Pilotflamme, ein katalytischer Brenner oder ein Heizdraht angeordnet sein, der ggf. restliche brennbare Verunreinigungen verbrennt. Ebenfalls denkbar ist eine Frischluftzufuhr in Verbindung mit der Ableitung gereinigter Abluft.

Die JP 2000 105003 A beschreibt ein Kälteaggregat, welches mit einem entzündlichen Arbeitsfluid betrieben wird, wobei das Aggregat aus zwei Teilen bestehen kann, von denen das eine im Innenraum eines Gebäudes und das andere außen im Freien aufgestellt ist. Um zu verhindern, dass im Falle einer Leckage Arbeitsfluid entweichen kann, werden die Innenwände des Innengehäuses mit Adsorbensmaterial ausgekleidet und die Leitungen des außen aufgestellten Teils mit einer Beschichtung aus Adsorbensmaterial beschichtet. Als Adsorbens wird unter anderem Aktivkohle vorgeschlagen.

Problematisch ist beim Einsatz von Aktivkohle als Adsorbens, dass Aktivkohle mit der Zeit an der Luft altert, weil langsame Oxidationsvorgänge stattfinden. Aufgrund der Anforderungen eines Sicherheitskonzeptes an die Verfügbarkeit über die Lebensdauer von Geräten, in denen linksdrehende Kreisprozesse betrieben werden, wie zum Beispiel Wärmepumpen, muss eine Degradation des Adsorptionsmittels aber unbedingt vermieden werden, vor allem wenn sie unbemerkt geschehen könnte.

Je nach Bauart, Aufstellungsort und Betriebsweise beispielsweise einer Wärmepumpe ergeben sich unterschiedliche Anforderungen an eine mögliche Belastung des Adsorptionsmittels durch Co-Adsorbentien, also etwa VOC, Wasserdampf aus Luftfeuchte, Luftsauerstoff, Temperaturwechseln, und anderen. Zu unterscheiden ist dabei zwischen Auskleidungen und durchströmten Sorptionsbetten. Bei den durchströmten Sorptionsbetten ist zu unterscheiden zwischen solchen, die innerhalb eines Gehäuses im Umluftbetrieb sind und solchen, die nach außen hin entlüften. Die Erfindung betrifft hierbei letztere, wobei jedoch auch Kombinationen mit den davor erwähnten umluftbetriebenen Sorptionsbetten und Auskleidungen einsetzbar sind. Es wird im folgenden angenommen, dass sich das Sorptionsbett in einem Kanal mit einer Einströmseite und einer Ausströmseite befindet, und an beiden Seiten offen ist, wobei die Bauform einer erfindungsgemäßen Vorrichtung durch die Merkmale des unabhängigen Anspruchs 1 vorgegeben ist.

Die Belastung solcher in Bezug auf das Gehäuse nach innen und nach außen offenen Sorptionsbetten durch Kontamination wird durch Diffusion und Konvektion von Kontaminaten, im Falle der Adsorption von Co-Adsorbenzien, von beiden Kanalöffnungen in das Sorptionsbett hinein verursacht. Die Kontaminaten können dabei reversible oder auch irreversible Degradationen der Sorptionskapazität des Sorptionsbettes gegenüber dem austretenden Kältemittel verursachen. Die Diffusionsströmung wird dabei einzig durch das Konzentrationsgefälle angetrieben, während konvektive Einträge durch wetterinduzierte Luftdruck- oder auch Temperaturgradienten zwischen Gehäuse und Umgebung verursacht werden. Die resultierenden Druckunterschiede führen zu Ausgleichsströmungen durch das Sorptionsbett und damit zum Stofftransport von Kontaminaten in das Sorptionsbett.

Aus dem Gehäuse, in dem der Kreisprozess durchgeführt wird, kommen als Kontaminaten in Betracht: ein- und mehrwertige Alkohole, Feuchte, Ziehfette, Schneidöle, Schäummittel und RCM-Öle.

Aus der Umgebung des Gehäuses, in dem der Kreisprozess durchgeführt wird, kommen als Kontaminaten in Betracht: Ketone, Aldehyde, Aromaten, ein- und mehrwertige Alkohole, Siloxane, Feuchte, Feinstaub, Zigarettenrauch.

Bei Aufstellung in Gebäuden ist im Allgemeinen die Belastung aus dem Aufstellungsraum über die Lebensdauer als stärkerer Eintrag von Kontaminaten zu sehen. Demzufolge erfolgt die Degradation des Sorptionsbettes von beiden Kanalöffnungen in das Bett mit unterschiedlichen Geschwindigkeiten und Degradationsgraden, so dass sich von beiden Seiten Degradationszonen in das Bett entwickeln, die die Beladungskapazität des Sorptionsbettes über die Zeit vermindern, bis die Funktion der sorptiven Sicherheitslösung so stark gestört wird, dass Arbeitsfluid bei Leckagen in den Aufstellungsraum entweichen könnte.

Die Aufgabe der Erfindung ist daher, eine sichere Vorrichtung zur Verfügung zu stellen, die die beschriebenen Nachteile nicht mehr aufweist. Die Erfindung löst die Aufgabe durch eine Vorrichtung zur sicheren Durchführung eines linksdrehenden thermodynamischen Kreisprozesses mittels eines entzündlichen Arbeitsfluids, welches in einem geschlossenen, hermetisch dichten Arbeitsfluidumlauf geführt wird und welcher in der Vorrichtung enthalten ist,, aufweisend
- mindestens einen Verdichter für Arbeitsfluid,
- mindestens eine Entspannungseinrichtung für Arbeitsfluid,
- mindestens zwei Wärmeübertrager für Arbeitsfluid mit jeweils mindestens zwei Anschlüssen für Wärmeüberträgerfluide,
- ein Gehäuse, welches alle am geschlossenen Arbeitsfluidumlauf angeschlossenen Einrichtungen umfasst und weitere Einrichtungen umfassen kann,
- mindestens einen Sorptionskanal mit einem Adsorber, der von Gas, welches das Arbeitsfluid enthalten kann, durchströmt werden kann, wobei der Adsorber (12) einen Hauptadsorber (19) enthält und das Arbeitsfluid vom Hauptadsorber (19) aufgenommen durchströmt werden kann,
- der Sorptionskanal direkt an das Gehäuse anschließt und zu ihm offen ist,
- der Sorptionskanal zur Umgebung des Gehäuses für Gas offen ist, wobei
- der Adsorber im Sorptionskanal zusätzlich zu dem Hauptadsorber Schutzschichten aufweist, die so gestaltet sind, dass der Hauptadsorber Adsorbens im Adsorber vor Kontamination geschützt ist,
- und der Adsorber im Sorptionskanal aus einem Hauptadsorber aus Aktivkohle sowohl in Strömungsrichtung vor als auch nach dem Hauptadsorber aus jeweils mindestens einer Schutzschicht gebildet ist

Somit ist vorgesehen, den Sorptionskanal zu verlängern und an beiden Seiten zusätzliche Schutzschichten vorzusehen. Diese Schutzschichten sind dabei so ausgeführt, dass sie auf die jeweiligen Kontaminaten abzielen und diese vorzugsweise über Chemisorption dauerhaft binden. Durch die unterschiedlichen Stoffklassen der Kontaminaten sind auch auf Stoffklassen angepasste Schutzschichten-Stapel möglich, die eine selektive Sorption der jeweiligen Stoffklasse zulassen. Auf diese Weise wird das eigentliche Sorptionsbett, welches das Arbeitsfluid binden soll, dauerhaft geschont und geschützt.

Die selektive Sorption erfolgt beispielsweise für Feuchte durch Zeolithe vom Typ 3A, 4A und 5A, ferner durch Aluminium oder Silicagel. Ketone, Aldehyde, Aromaten und ein- und mehrwertige Alkohole können durch Zeolithe mit größeren Porendurchmessern oder eine semipermeable Membran abgefangen werden. Feinstaub kann durch einen HEPA-Filter, Sauerstoff durch eine Kupferschüttung abgeschieden werden. Schwefelverbindungen und saure Gase, sofern zu befürchten, werden durch Aktivkohle, die mit Kaliumcarbonat oder Kaliumjodid imprägniert ist, entfernt.

Angepasst an die Strömungsverhältnisse im Sorptionsbett sind unterschiedliche Geometrien und Anordnungen der Schutzschichten vorzusehen. In Ausgestaltungen ist vorgesehen, dass Schutzschichten nicht nur an der Einlass- und der Auslassöffnung des Sorptionsbettes, sondern auch sektionsweise innerhalb des Sorptionsbettes angeordnet werden.

Das Sorptionsbett wird im Regelfall als Formkörperschüttung ausgeführt, der Sorptionskanal ist dafür vertikal ausgeführt. Die Formkörper liegen dabei auf einem Einlasssieb auf, sofern das Sorptionsbett von unten nach oben durchströmt wird. Ein oberseitiger Strömungsauslass ist vorteilhaft, weil auf diese Weise ein einfacher oberseitiger Klappdeckel, der durch sehr geringen Gasdruck angehoben und geöffnet wird, einen Großteil der Kontaminaten aus der Umgebung vom Hineindiffundieren in die Schüttung abhalten kann.

In Ausgestaltungen ist der Sorptionskanal mehrzügig ausgestaltet und weist eine unterseitige oder auch oberseitige Umlenkung auf. In dieser Umlenkung können besonders ausgestaltete Sorptionsschichten angeordnet sein, deren Strömungswiderstand auf der Seite des Innenradius höher ist als auf dem Außenradius. In der Umlenkung kann aber auch lediglich eine Luftschicht vorgesehen werden. In weiteren Ausgestaltungen sind die Schüttungen in Siebkörben angeordnet, die einzeln entnehmbar sind. Zur weiteren Gestaltung der Strömung können in den Siebkörben auch Umlenkvorrichtungen oder Schikanen angeordnet werden, die ihrerseits aus Siebkörben mit Schüttungen gebildet sind, die feinkörniger sind und einen höheren Strömungswiderstand aufweisen.

Weiterhin kann an der Austrittsöffnung des Sorptionskanals eine gasdurchlässige Klappe vorgesehen werden, um zu verhindern, dass Gegenstände von außen in den Sorptionskanal gelangen können. Die Erfindung wird nach folgend anhand von 2 Figuren näher erläutert. Hierbei zeigen:
Figur 1 eine Wärmepumpe mit einem einzügigen Sorptionskanal,
Figur 2 eine Wärmepumpe mit einem zweizügigen Sorptionskanal.

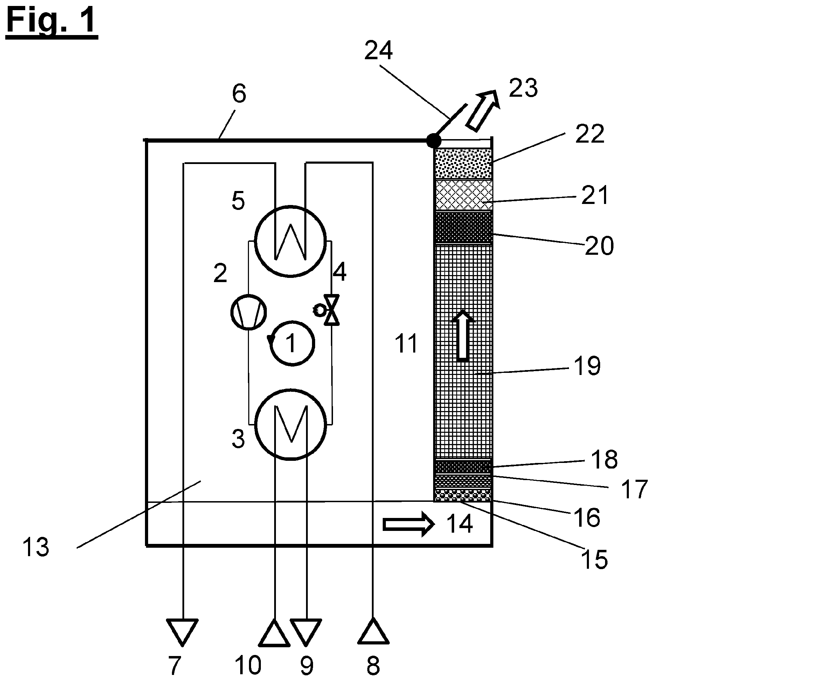

Fig. 1 zeigt eine Wärmepumpe mit Außen-Adsorber anhand einer Prinzipskizze eines Kältekreises 1 mit einem Verdichter 2, einem Kondensator 3, einer Druckreduzierung 4 und einem Verdampfer 5 in einem Gehäuse, welches aus einem inneren Gehäuse 6 und einem direkt anschließenden einzügigen Sorptionskanal 11 gebildet ist. Im Sorptionskanal 11 ist der Adsorber 12 angeordnet. das Gehäuse umgebenden Adsorber 12 gebildet ist. Hierbei ist das Gehäuse 6 im unteren Bereich zum Sorptionskanal 11 hin offen und nach allen anderen Seiten hin geschlossen, während der Sorptionskanal 11 nach oben offen ist. Die Wärmepumpe verfügt über einen Wärmequellen-Anschluss 7, einen Wärmequellen-Vorlauf 8, einen Wärmesenken-Vorlauf 9 und einen Wärmesenken-Anschluss 10.

Der Kältekreis 1 wird in diesem Beispiel mit dem entzündlichen Arbeitsfluid Propan, welches auch unter der Bezeichnung R290 bekannt ist, betrieben. Propan ist schwerer als Luft, daher sinkt es im Falle einer Leckage im Kältekreis 1 tendenziell im Gehäuse 6 nach unten, wenngleich es sich bei kleinen Leckagen gut vermischt. Im unteren Bereich des Gehäuses 6 ist daher eine Öffnung mit einem Einströmbereich 14 vorgesehen, durch die ein Luft-Propangemisch aus dem Innenraum 13 in den Sorptionskanal 11 mit dem Adsorber 12 gelangt.

Im Sorptionskanal 11 sind in Strömungsrichtung die 3 Schutzschichten 16, 17 und 18 angeordnet, die verschiedene Kontaminaten, die aus dem Innenraum 13 des Gehäuses 6 entstammen, abscheiden und eine Degradation des Hauptadsorbers 19 auf diese Weise verhindern. Die 3 Schutzschichten 16, 17 und 18 liegen auf einem Sieb 15 auf und werden in passgenauen Gitterkörben in den Sorptionskanal 11 eingebracht. In dem Hauptadsorber 19 werden im Fall einer Leckage die brennbaren Bestandteile des Arbeitsfluids, bei R290 ist das Propan, adsorbiert. In der weiteren Strömungsrichtung sind die 3 Schutzschichten 20, 21 und 22 angeordnet, die eine Degradation des Hauptadsorbers 19 gegenüber Kontaminaten aus dem Aufstellungsraum verhindern. Die drei Schutzschichten 16, 17 und 18 bilden zusammen mit dem Hauptadsorber 19 und den 3 Schutzschichten 20, 21 und 22 den Adsorber 12. In Strömungsrichtung nachfolgend befindet sich die Austrittsöffnung 23, die durch eine Klappe 24 geschützt ist. Die Klappe ist dabei nicht luftdicht ausgeführt, weil sich sonst bei wetterbedingtem Hochdruck ein Überdruck gegenüber dem Gehäuseinneren 13 aufbauen könnte. Sie bietet aber einen mechanischen Schutz.

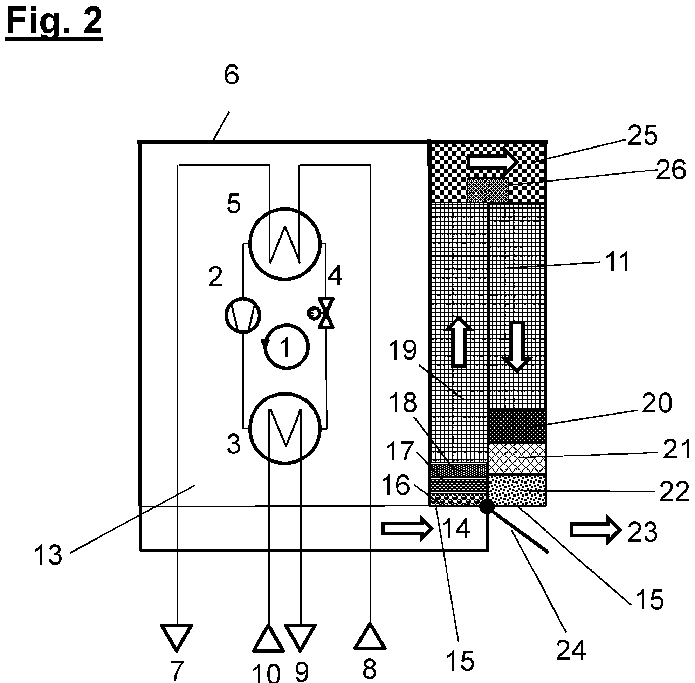

Fig. 2 zeigt eine zweizügige Variante des Sorptionskanals 11. Eine solche mehrzügige Variante ist dann zu verwenden, wenn die Menge des Adsorptionsmaterials, welches den Hauptadsorbers 19 bildet, in einem einzügigen Sorptionskanal nicht gleichzeitig mit den Schutzschichten aus Platzgründen untergebracht werden kann. In der Umlenkungsschicht 25 kann hierbei eine weitere Schutzschicht platziert werden oder es kann leer gelassen werden, wobei die Schutzschicht aus Luft besteht. Auf der Innenseite der Umlenkung würde sich ohne zusätzliche Maßnahmen eine Kurzschlussströmung einstellen, da der Strömungswiderstand auf dem kürzesten Weg geringer ist als weiter außen, was zu einer ungleichmäßigen Strömung führen würde. Daher ist der Umlenkbereich entweder freizulassen oder es wird auf der Innenseite eine Schikaneschicht 26 eingebracht, die einen erhöhten Strömungswiderstand bietet.

Derartige Schikaneschichten können auch in der Schüttung oder an den Wandungen angebracht werden, um die Strömung zu beeinflussen. Das Material der Schutzschichten kann auch teilweise mit dem Adsorptionsmaterial des Hauptadsorbers vermischt werden oder mit ihm angereichert werden, um eine verbesserte Schutzwirkung zu erreichen.

### Bezugszeichenliste

- 1: Kältekreis
- 2: Verdichter
- 3: Kondensator
- 4: Druckreduzierung
- 5: Verdampfer
- 6: Inneres Gehäuse
- 7: Wärmequellen-Anschluss
- 8: Wärmequellen-Vorlauf
- 9: Wärmesenken-Vorlauf
- 10: Wärmesenken-Anschluss
- 11: Sorptionskanal
- 12: Adsorber
- 13: Innenraum
- 14: Einströmbereich
- 15: Sieb
- 16: Schutzschicht
- 17: Schutzschicht
- 18: Schutzschicht
- 19: Hauptadsorber
- 20: Schutzschicht
- 21: Schutzschicht
- 22: Schutzschicht
- 23: Austrittsöffnung
- 24: Klappe
- 25: Umlenkungsschicht
- 26: Schikaneschicht

## Patentansprüche

1. Vorrichtung zur sicheren Durchführung eines linksdrehenden thermodynamischen Kreisprozesses (1) mittels eines entzündlichen Arbeitsfluids, welches in einem geschlossenen, hermetisch dichten Arbeitsfluidumlauf geführt wird und welcher in der Vorrichtung enthalten ist, aufweisend
- mindestens einen Verdichter (2) für Arbeitsfluid,
- mindestens eine Entspannungseinrichtung (4) für Arbeitsfluid,
- mindestens zwei Wärmeübertrager (3, 5) für Arbeitsfluid mit jeweils mindestens zwei Anschlüssen (7, 8, 9, 10) für Wärmeüberträgerfluide,
- ein Gehäuse (6), welches alle am geschlossenen Arbeitsfluidumlauf angeschlossenen Einrichtungen umfasst und weitere Einrichtungen umfassen kann,
- mindestens einen Sorptionskanal (11) mit einem Adsorber (12), der von Gas, welches das Arbeitsfluid enthalten kann, durchströmt werden kann, wobei der Adsorber (12) einen Hauptadsorber (19) enthält und das Arbeitsfluid vom Hauptadsorber (19) aufgenommen werden kann,
- der Sorptionskanal (11) direkt an das Gehäuse (6) anschließt und zu ihm offen ist,
- der Sorptionskanal (11) zur Umgebung des Gehäuses für Gas offen ist,
**dadurch gekennzeichnet, dass**
- der Adsorber (12) im Sorptionskanal (11) zusätzlich zu dem Hauptadsorber (19) Schutzschichten (16, 17, 18, 20, 21, 22) aufweist, die so gestaltet sind, dass der Hauptadsorber (19) im Adsorber (12) vor Kontamination geschützt ist,
- der Hauptadsorber (19) aus Aktivkohle ist, und in dem Sorptionskanal (11) sowohl in Strömungsrichtung vor als auch nach dem Hauptadsorber (19) mindestens eine der Schutzschichten (16, 17, 18, 20, 21, 22) angeordnet ist.

2. Vorrichtung nach Anspruch 1, **dadurch gekennzeichnet, dass** die Schutzschichten (16, 17, 18, 20, 21, 22) gebildet sind aus Materialien oder Mischungen enthaltend Zeolithe vom Typ 3A, 4A und 5A, Aluminium, Silicagel, HEPA-Filter, Kupfer, mit Kaliumkarbonat oder Kaliumjodid imprägnierte Aktivkohle oder Zeolithe mit größeren Porendurchmessern oder eine semipermeable Membran enthalten.

3. Vorrichtung nach einem der Ansprüche 1 oder 2, **dadurch gekennzeichnet, dass** der Sorptionskanal (11) mehrzügig ist und mindestens eine Umlenkung (25) aufweist.

4. Vorrichtung nach Anspruch 3, **dadurch gekennzeichnet, dass** die Umlenkung (25) eine weitere Schutzschicht enthält, welche aus Luft ist.

5. Vorrichtung nach einem der Ansprüche 1 bis 4, **dadurch gekennzeichnet, dass** die einzelnen Schutzschichten und der Hauptadsorber in einzeln entnehmbaren Gitterkörben angeordnet sind.

6. Vorrichtung nach einem der Ansprüche 1 bis 5, **dadurch gekennzeichnet, dass** der Sorptionskanal (11) strömungsvergleichmäßigende Elemente oder auch Schikanen (26) enthält.

7. Vorrichtung nach einem der Ansprüche 1 bis 6, **dadurch gekennzeichnet, dass** der Sorptionskanal (11) an seiner Austrittsöffnung (23) eine gasdurchlässige Klappe (24) aufweist.

## Claims

1. Device for safely performing a counter-clockwise thermodynamic cycle (1) using a combustible working fluid, which is circulated in a closed, hermetically sealed working fluid circuit and which is contained in the device, comprising
- at least one compressor (2) for working fluid,
- at least one expansion device (4) for working fluid,
- at least two heat exchangers (3, 5) for working fluid, each with at least two connections (7, 8, 9, 10) for heat exchanger fluids,
- a housing (6) which comprises all devices connected to the closed working fluid circuit and may comprise further devices,
- at least one sorption channel (11) with an adsorber (12) through which gas, which may contain the working fluid, can flow, wherein the adsorber (12) contains a main adsorber (19) and the working fluid can be absorbed by the main adsorber (19),
- the sorption channel (11) is directly connected to the housing (6) and is open to it,
- the sorption channel (11) is open to the environment of the housing for gas, **characterised in that**
- the adsorber (12) in the sorption channel (11) has, in addition to the main adsorber (19), protective layers (16, 17, 18, 20, 21, 22) which are designed such that the main adsorber (19) in the adsorber (12) is protected against contamination,
- the main adsorber (19) is made of activated carbon, and at least one of the protective layers (16, 17, 18, 20, 21, 22) is arranged in the sorption channel (11) both upstream and downstream of the main adsorber (19) in the direction of flow.

2. Device according to claim 1, **characterised in that** the protective layers (16, 17, 18, 20, 21, 22) are formed from materials or mixtures containing zeolites of type 3A, 4A and 5A, aluminium, silica gel, HEPA filters, copper, activated carbon impregnated with potassium carbonate or potassium iodide, or zeolites with larger pore diameters or a semipermeable membrane .

3. Device according to one of claims 1 or 2, **characterised in that** the sorption channel (11) has multiple passages and at least one deflection (25).

4. Device according to claim 3, **characterised in that** the deflection (25) contains a further protective layer, which is made of air.

5. Device according to one of claims 1 to 4, **characterised in that** the individual protective layers and the main adsorber are arranged in individually removable mesh baskets.

6. Device according to one of claims 1 to 5, **characterised in that** the sorption channel (11) contains flow-equalising elements or baffles (26).

7. Device according to one of claims 1 to 6, **characterised in that** the sorption channel (11) has a gas-permeable flap (24) at its outlet opening (23).

## Revendications

1. Dispositif destiné à la mise en œuvre sûre d'un processus à cycle thermodynamique (1) tournant à gauche au moyen d'un fluide de travail inflammable, lequel est guidé dans un circuit de fluide de travail fermé et hermétiquement étanche et lequel est contenu dans le dispositif, présentant
- au moins un compresseur (2) pour un fluide de travail,
- au moins un appareil de détente (4) pour un fluide de travail,
- au moins deux échangeurs de chaleur (3, 5) pour un fluide de travail avec respectivement au moins deux raccords (7, 8, 9, 10) pour des fluides d'échangeur de chaleur,
- un boîtier (6), lequel comprend tous les appareils raccordés au circuit de fluide de travail fermé et peut comprendre des appareils supplémentaires,
- au moins un canal de sorption (11) avec un adsorbeur (12), qui peut être traversé par du gaz, lequel peut contenir le fluide de travail, dans lequel l'adsorbeur (12) contient un adsorbeur principal (19) et le fluide de travail peut être absorbé par l'adsorbeur principal (19),
- le canal de sorption (11) est directement raccordé au boîtier (6) et ouvert vers celui-ci,
- le canal de sorption (11) est ouvert vers l'environnement du boîtier pour du gaz,
**caractérisé en ce que**
- l'adsorbeur (12) présente, dans le canal de sorption (11), en plus de l'adsorbeur principal (19), des couches de protection (16, 17, 18, 20, 21, 22) qui sont formées de sorte que l'adsorbeur principal (19) dans l'adsorbeur (12) est protégé contre la contamination,
- l'adsorbeur principal (19) est constitué de charbon actif, et au moins une des couches de protection (16, 17, 18, 20, 21, 22) est disposée dans le canal de sorption (11) à la fois en amont et en aval de l'adsorbeur principal (19) dans le sens d'écoulement.

2. Dispositif selon la revendication 1, **caractérisé en ce que** les couches de protection (16, 17, 18, 20, 21, 22) sont constituées de matériaux ou de mélanges contenant des zéolithes de type 3A, 4A et 5A, d'aluminium, de gel de silice, de filtres HEPA, de cuivre, de charbon actif imprégné de carbonate de potassium ou d'iodure de potassium ou de zéolithes à pores de plus grand diamètre, ou d'une membrane semiperméable.

3. Dispositif selon l'une quelconque des revendications 1 ou 2, **caractérisé en ce que** le canal de sorption (11) est à voies multiples et présente au moins une déviation (25).

4. Dispositif selon la revendication 3, **caractérisé en ce que** la déviation (25) contient une couche de protection supplémentaire, laquelle est constituée d'air.

5. Dispositif selon l'une quelconque des revendications 1 à 4, **caractérisé en ce que** les différentes couches de protection et l'adsorbeur principal sont disposés dans des paniers grillagés amovibles individuellement.

6. Dispositif selon l'une quelconque des revendications 1 à 5, **caractérisé en ce que** le canal de sorption (11) contient des éléments uniformisant l'écoulement ou également des chicanes (26).

7. Dispositif selon l'une quelconque des revendications 1 à 6, **caractérisé en ce que** le canal de sorption (11) présente un clapet perméable aux gaz (24) au niveau de son ouverture de sortie (23).
